Europäisches Patentamt

European Patent Office

Office européen des brevets

(11) Veröffentlichungsnummer: **0 462 658 A2**

# EUROPÄISCHE PATENTANMELDUNG

(21) Anmeldenummer: **91201473.5**

(51) Int. Cl.5: **G01N 23/20**

(22) Anmeldetag: **13.06.91**

(30) Priorität: **20.06.90 DE 4019613**
**31.10.90 DE 4034602**

(43) Veröffentlichungstag der Anmeldung:
**27.12.91 Patentblatt 91/52**

(84) Benannte Vertragsstaaten:
**DE FR GB**

(71) Anmelder: **Philips Patentverwaltung GmbH**
**Wendenstrasse 35 Postfach 10 51 49**
**W-2000 Hamburg 1(DE)**
(84) **DE**

(71) Anmelder: **N.V. Philips' Gloeilampenfabrieken**
**Groenewoudseweg 1**
**NL-5621 BA Eindhoven(NL)**
(84) **FR GB**

(72) Erfinder: **Harding, Geoffrey, Dr.**
**Franzosenkoppel 110a**
**W-2000 Hamburg 53(DE)**

(74) Vertreter: **Hartmann, Heinrich, Dipl.-Ing. et al**
**Philips Patentverwaltung GmbH**
**Wendenstrasse 35 Postfach 10 51 49**
**W-2000 Hamburg 1(DE)**

(54) **Anordnung zum Messen des Impulsübertragsspektrums von Röntgenquanten.**

(57) Die Erfindung bezieht sich auf eine Anordnung zum Messen des Impulsübertragsspektrums von in einem Untersuchungsbereich elastisch gestreuten Röntgenquanten mit einem polychromatischen Röntgenstrahler, einer zwischen dem Röntgenstrahler und dem Untersuchungsbereich angeordneten ersten Blendenanordnung zur Ausblendung eines den Untersuchungsbereich auf der Mantelfläche eines Kegels durchsetzenden Primärstrahlenbündels, einer aus mehreren Detektorelementen bestehenden Detektoranordnung und einer zwischen dem Untersuchungsbereich und der Detektoranordnung befindlichen zweiten Blendenanordnung, die jedem Detektorelement jeweils die Streustrahlung zuordnet, die in einem Teil des Primärstrahlenbündels unter einem bestimmten Streuwinkel gestreut wird. Die Zuordnung zwischen den einzelnen Abschnitten des Primärstrahlenbündels und den verschiedenen Detektorelementen erfolgt dabei dadurch, daß die zweite Blendenanordnung eine schlitzförmige Öffnung aufweist und daß die Form der schlitzförmigen Öffnung und der Detektorelemente der Form eines Querschnitts durch das Primärstrahlenbündel angepaßt ist.

FIG.5

Die Erfindung betrifft eine Anordnung zum Messen des Impulsübertragsspektrums von in einem Untersuchungsbereich elastisch gestreuten Röntgenquanten, mit einem polychromatischen Röntgenstrahler, einer zwischen dem Röntgenstrahler und dem Untersuchungsbereich angeordneten Primär-Blendenanordnung zur Ausblendung eines den Untersuchungsbereich auf der Mantelfläche eines Kegels durchsetzenden Primärstrahlenbündels, einer aus mehreren Detektorelementen bestehenden Detektoranordnung und einer zwischen dem Untersuchungsbereich und der Detektoranordnung befindlichen Sekundär-Blendenanordnung, die den verschiedenen Detektorelementen jeweils die elastisch gestreute Streustrahlung von in unterschiedlichen Tiefen des Untersuchungsbereiches liegenden Abschnitten zuordnet.

Eine solche Anordnung ist aus der EP-OS 360 347 bekannt. Sie kann zur Gepäckkontrolle eingesetzt werden, um beispielsweise Sprengstoffe oder Drogen zu identifizieren. Es hat sich nämlich gezeigt, daß diese Stoffe aufgrund ihrer kristallinen Struktur ein durch Beugung erzeugtes Spektrum mit deutlich ausgeprägten Spitzen zeigen, das für diese Stoffe charakteristisch ist und sich deutlich von den Spektren anderer Stoffe unterscheidet, die gewöhnlich in Gepäckstücken mitgeführt werden.

Bei der bekannten Anordnung, bei der die erste Blendenanordnung eine kreisförmige Öffnung hat, so daß das Primärstrahlenbündel im Untersuchungsbereich die Mantelfläche eines Kreiskegels beschreibt, umfaßt die zweite Blendenanordnung mehrere zueinander konzentrisch angeordnete Rohre, durch die hindurch die aus mehreren ringförmigen Detektorelementen bestehende Detektoranordnung von Streustrahlung getroffen wird. Dadurch wird der Untersuchungsbereich in eine der Anzahl der Detektorelemente entsprechende Anzahl von Abschnitten (in Form paralleler Scheiben) unterteilt; jedes Detektorelement erfaßt die Streustrahlung für einen dieser Abschnitte.

Es ist Aufgabe der vorliegenden Erfindung, eine Anordnung der eingangs genannten Art zu schaffen, mit der das Impulsübertragsspektrum auf andere Weise bestimmt werden kann. Diese Aufgabe wird erfindungsgemäß dadurch gelöst, daß die Sekundär-Blendenanordnung eine schlitzförmige Öffnung aufweist und daß die schlitzförmige Öffnung und die Detektorelemente sich kreisbogenförmig um eine durch den Strahler verlaufende Systemachse erstrecken.

Die Erfindung basiert auf dem Gedanken, daß die verschiedenen Abschnitte des Primärstrahlenbündels im Untersuchungsbereich durch die schlitzförmige Öffnung der als Schlitzblende ausgebildeten Sekundär-Blendenanordnung hindurch auf die Detektoranordnung abgebildet werden, so daß die Streustrahlung aus unterschiedlichen Abschnitten des Untersuchungsbereichs von den Detektorelementen getrennt gemessen wird. Die schlitzförmige Öffnung (in einer die Strahlung absorbierenden Fläche) der Sekundär-Blendenanordnung hat also die gleiche Funktion wie die Spalte zwischen den Rohren der bekannten Anordnung: Auch dabei empfängt jedes Detektorelement (durch die Öffnung hindurch) Streustrahlung unter einem praktisch konstanten Streuwinkel.

Jedoch haben die aus verschiedenen Abschnitten des Untersuchungsbereiches durch die schlitzförmige Öffnung zu den verschiedenen Detektorelementen gelangenden Streustrahlen unterschiedliche Streuwinkel - im Gegensatz zu der bekannten Anordnung, wo sämtliche Detektorelemente von unter dem gleichen Streuwinkel gestreuter Streustrahlung getroffen werden. Deshalb und weil der Impulsübertrag in guter Näherung dem Produkt aus Streuwinkel und Energie der Röntgenquanten proportional ist, muß für ein bestimmtes Impulsübertragsspektrum die Energie der Röntgenquanten umso größer sein, je kleiner der Streuwinkel ist.

Ein Vorteil der Erfindung gegenüber der eingangs erwähnten bekannten Anordnung besteht darin, daß die erfindungsgemäße Sekundär-Blendenanordnung mit einer schlitzförmigen Öffnung wesentlich leichter mit der erforderlichen Genauigkeit herzustellen ist als die aus koaxialen Rohren bestehende Blende bei der bekannten Anordnung. Diese Rohre müssen nämlich bei einem Durchmesserunterschied von allenfalls wenigen Millimetern relativ lang sein (z.B. 800 mm) und über die gesamte Länge hinweg koaxial zueinander verlaufen, was eine hohe mechanische Präzision voraussetzt.

Die Rohre bei der bekannten Anordnung können nicht beliebig dünn sein, so daß ein Teil der Streustrahlung absorbiert wird. Außerdem wirken die Rohrwände als weitere Quelle von Streustrahlung. Bei der Erfindung wird demgegenüber die Streustrahlung durch die Blendenanordnung nicht noch weiter reduziert, und die innerhalb der Blendenanordnung (an den Rändern des Schlitzes) zusätzlich erzeugte Streustrahlung ist im Vergleich der bekannten Anordnung wesentlich schwächer.

Je genauer das Impulsübertragsspektrum gemessen werden soll, desto größer muß die Zahl der voneinander unabhängig messenden Detektorelemente und desto enger muß der Schlitz sein. Mit dieser Zunahme an Meßgenauigkeit geht aber eine Verlängerung der Meßzeit einher, und zwar im gleichen Maße wie bei der bekannten Anordnung. Eine bevorzugte Weiterbildung ermöglicht demgegenüber aber eine Verkürzung der Meßzeit und/oder eine Erhöhung der Meßgenauigkeit. Dies wird dadurch erreicht, daß die Sekundär-Blendenanordnung noch weitere, kreisbogenförmig um die Systemachse herum verlaufende schlitzförmige Öffnungen enthält, die derart angeordnet sind, daß wenigstens ein Teil der Detektorelemente von Streustrahlung getroffen wird, die in weiteren Abschnitten des Primärstrahlenbündels unter anderen Streuwinkeln gestreut wird.

Bei dieser Weiterbildung wird ein bestimmter Abschnitt des Primärstrahlenbündels innerhalb des Untersuchungsbereichs nicht nur von einem einzigen Detektorelement "gesehen", sondern - durch die weiteren schlitzförmigen Öffnungen hindurch - auch von anderen Detektoren, was gleichbedeutend damit ist, daß ein Detektorelement mehrere voneinander entfernte Abschnitte des Primärstrahlenkegels "sehen" kann. Damit läßt sich eine Zunahme der Meßgenauigkeit und/oder eine Verkürzung der Meßzeit erreichen. Die Tatsache, daß ein Detektorelement dabei die Streustrahlung aus zwei oder mehr voneinander getrennten Abschnitten des Primärstrahlenkegels erfassen kann, bedeutet, daß sich die Streustrahlungsspektren aus diesen Bereichen überlagern.

In Gepäckstücken werden üblicherweise Stoffe mit geringer Dichte mitgeführt, die ein sehr breitbandiges Impulsübertragsspektrum ohne ausgeprägte Maxima aufweisen. Befindet sich in einem dieser Abschnitte der zu detektierende Stoff mit kristallinem Aufbau (Sprengstoff, Drogen usw.), dann kann dieser trotz der Überlagerung aufgrund seines für ihn charakteristischen Impulsübertragsspektrums mit ausgeprägten Maxima detektiert werden. Nur in ganz wenigen Ausnahmefällen - wenn sich im Untersuchungsbereich Stoffe mit hoher Dichte und/oder ebenfalls kristallinem Aufbau befinden - kann es zu Fehlinterpretationen kommen. Zur Vermeidung solcher Fehlinterpretationen ist nach einer Weiterbildung der Erfindung vorgesehen, daß Mittel zum Abdecken der weiteren schlitzförmigen Öffnungen vorgesehen sind.

Wenn die weiteren schlitzförmigen Öffnungen abgedeckt sind, so daß alle Detektorelemente nur durch die eine schlitzförmige Öffnung hindurch Streustrahlung empfangen, "sieht" jedes Detektorelement nur einen einzigen Abschnitt des Primärstrahlenkegels, so daß eine einwandfreie Identifikation (bei verlängerter Meßzeit) möglich ist.

Eine Weiterbildung der Erfindung sieht vor, daß das Primärstrahlenbündel die Form eines ebenen Fächers hat, wobei in weiterer Ausgestaltung die Systemachse die Ebene des Fächers unter einem Winkel von 90° schneidet, und die schlitzförmige Öffnung und gegebenenfalls weitere schlitzförmige Öffnungen kreisförmig und mit ihren Längsseiten parallel zu dem Fächer verlaufen. Ein ebener Fächer kann als Sektor eines Kreises betrachtet werden, zu dem die Mantelfläche eines Kegels entartet, dessen (halber) Öffnungswinkel 90° beträgt. Der Begriff "Kegel", auf dessen Mantelfläche sich die Primärstrahlung ausbreitet, muß daher breit interpretiert werden. - Der Vorteil dieser Weiterbildung ist darin zu sehen, daß zur Erfassung des Impulsübertragsspektrums in einem dreidimensionalen Untersuchungsbereich zwischen dem Primärstrahlenbündel (Fächer) und dem Untersuchungsbereich nur eine eindimensionale Relativverschiebung (senkrecht zur Ebene des Fächers) erforderlich ist, falls der Fächer in der anderen Richtung den gesamten Untersuchungsbereich durchstrahlt.

Eine andere Ausgestaltung der Erfindung sieht vor, daß der Abstand der Detektorelemente voneinander (und ihre Breite) mit zunehmendem Abstand von dem Primärstrahlenbündel zunimmt und daß die Sekundär-Blendenanordnung eben ist. Die Sekundär-Blendenanordnung kann dann durch eine Blendenplatte gebildet werden.

In weiterer Ausgestaltung der Erfindung ist vorgesehen, daß mehrere längs der Systemachse gegeneinander versetzte Blendenpositionen vorgesehen sind, daß wenigstens eine Sekundär-Blendenanordnung vorhanden ist und daß sich jeweils nur in einer der Blendenpositionen eine Sekundär-Blendenanordnung befindet. Damit lassen sich die gesuchten Stoffe, wenn sie nur in einer dünnen Schicht vorhanden sind, besser nachweisen.

Je näher die Position der Sekundär-Blendenanordnung dem Untersuchungsbereich ist, desto geringer ist die Größe der von einzelnen Detektorelementen erfaßten Abschnitte aus dem Untersuchungsbereich. Dadurch nimmt der Einfluß einer dünnen Schicht des nachzuweisenden Stoffes auf das Impulsübertragungsspektum zu. Es ergibt sich hier also eine Art "Zoomeffekt". Es kommt noch hinzu, daß die durch die Geometrie der Anordnung vorgegebene Ungenauigkeit, mit der sich der Streuwinkel eines nachgewiesenen Röntgenquants bestimmen läßt und die eine Verbreitung der Spektrallinien im Impulsspektrum zur Folge hat, mit verringertem Abstand zwischen zweiter Blendenanordnung und Untersuchungsbereich ebenfalls verringert wird. Das durch das Impulsübertragsspektrum repräsentierte Beugungsmuster wird also schärfer.

Die Erfindung wird nachstehend anhand der Zeichnungen näher erläutert. Es zeigen:

Fig. 1    die Impulsübertragsspektren zweier unterschiedlicher Stoffe,

Fig. 2    eine erste Ausführungsform der Erfindung,

Fig. 3    einen Teil der Anordnung nach Fig. 2,

Fig. 4    die Elektronik zur Auswertung der Detektorsignale,

Fig. 5    eine verbesserte Ausführungsform,

Fig. 6    die dabei vorhandene Zuordnung zwischen verschiedenen Abschnitten des Untersuchungsbereichs und den einzelnen Detektorelementen und

Fig. 7    eine Draufsicht auf die dabei vorgesehenen mittel,

Fig. 8 die Anordnung nach Fig. 5 bei zum Untersuchungsbereich verschobener Sekundär-Blendenanordnung,

Fig. 9 eine andere Ausführungsform und

Fig. 10 dieselbe Ausführungsform in einer um 90° gedrehten Ansicht.

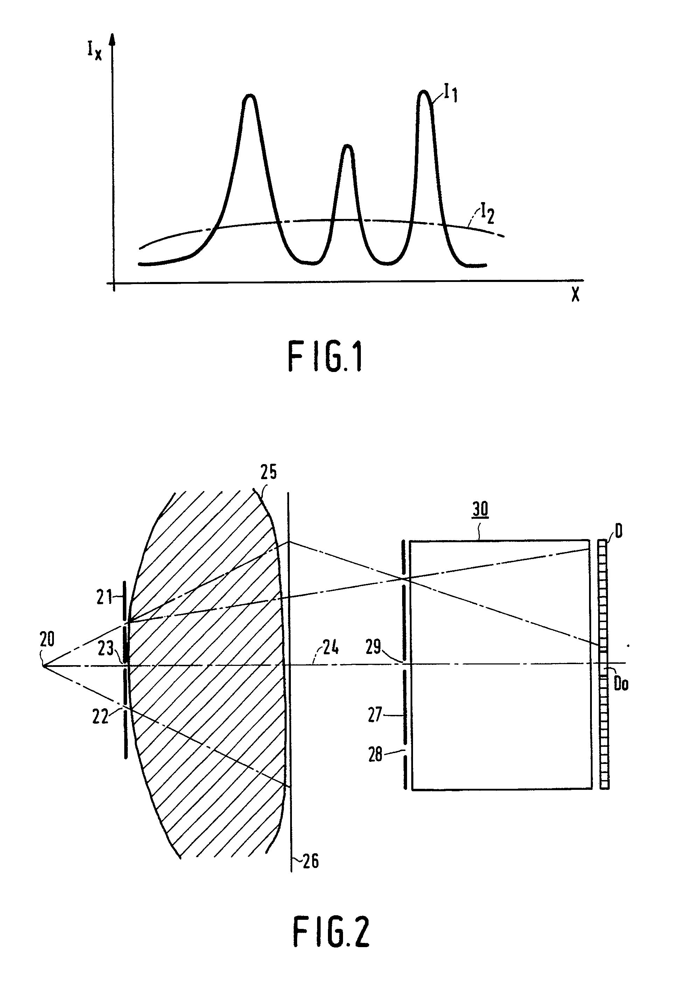

Fig. 1 zeigt ein Impulsübertragsspektrum, d.h. die Intensität $I_x$ einer Strahlung als Funktion des Impulsübertrages für verschiedene Stoffe. Mit I1 ist das Impulsübertragsspektrum eines kristallinen Stoffes dargestellt. Anhand dieses Spektrums kann also der Stoff identifiziert werden. I2 bezeichnet das Spektrum eines nichtkristallinen Stoffes. Es ist sehr breitbandig und besitzt keine ausgeprägten Maxima wie I1.

Die in Fig. 2 dargestellte Ausführungsform ist nicht maßstäblich dargestellt. Die Abmessungen in horizontaler Richtung sind im Vergleich zu den in vertikaler Richtung um einen Faktor von mehr als zehn vergrößert.

Mit 20 ist dabei der Fokus einer polychromatischen Röntgenstrahlenquelle bezeichnet. Diese wird in der Regel durch eine Röntgenröhre gebildet, die eine Anode besitzt, in deren Brennfleck (Fokus) bei Elektronenbeschuß polychromatische Röntgenstrahlung (Bremsstrahlung) erzeugt wird. Diesem breitbandigen Emissionsspektrum ist in der Regel noch das charakteristische Emissionsspektrum überlagert, das durch das Anodenmaterial bestimmt ist. Letzteres kann die Auswertung beeinträchtigen, wenn es von einer Wolframanode stammt. Die charakteristischen Linien von Wolfram liegen nämlich bei ca. 60 und 70 keV - mitten in dem für die Auswertung relevanten Energiebereich - und sind bei einer Röhrenspannung von z.B. 160 kV stark ausgeprägt. Benutzt man demgegenüber eine Anode, die mit einem Metall mit hoher Ordnungszahl beschichtet ist, vorzugsweise Thorium, dann ergeben sich am Rande des relevanten Energiebereichs - bei ca. 110 keV - Linien, die bei einer Röhrenspannung von 163 kV nur schwach ausgeprägt sind.

Die Röntgenstrahlung fällt auf eine Blendenplatte 21 mit einem kreisringförmigen Schlitz 22, so daß hinter der Blendenplatte 21 auf der Mantelfläche eines Kegelstumpfes ein Primärstrahlenbündel ausgeblendet wird. Weil die Blendenplatte 21 Primärstrahlung durchläßt, wird sie hier auch als Primär-Blendenanordnung bezeichnet. Der (halbe) Öffnungswinkel des Primärstrahlenbündels im Bogenmaß beträgt 0,041 rad bei einem Abstand zwischen Strahler 20 und Blende 21 von z.B. 745 mm. Die Blendenplatte 21 ist außerdem mit einem Loch 23 versehen, das sich im Zentrum des kreisförmigen Schlitzes 22 befindet und somit einen Zentralstrahl 24 ausblendet, der den Untersuchungsbereich ebenfalls durchsetzt und die Symmetrieachse der Anordnung bildet. Die Symmetrieachse bildet die Systemachse, so daß Zentralstrahl, Symmetrie- und Systemachse im vorliegenden Fall zusammenfallen. Der Untersuchungsbereich, in dem sich das zu untersuchende Objekt 25, beispielsweise ein Koffer befindet, wird auf der anderen Seite von der Blendenplatte 21 und auf der vom Strahler 20 abgewandten Seite durch eine transparente Platte 26 begrenzt, die parallel zur Blendenplatte 21 verläuft und von dieser einen Abstand von z.B. 450 mm aufweist.

Zur Erfassung der durch das Primärstrahlenbündel im Untersuchungsbereich erzeugten Streustrahlung ist eine Detektoranordnung D mit einer Anzahl von zur Achse 24 konzentrischen ringförmigen Detektorelementen vorgesehen. Jedem Abschnitt auf dem Primärstrahlenbündel innerhalb des Untersuchungsbereiches 25 wird durch eine zweite Blende 27, die sich zwischen der Platte 26 und der Detektoranordnung D befindet und die im folgenden auch als Sekundär-Blendenanordnung bezeichnet wird, eines der Detektorelemente zugeordnet. Die Blende 27 ist zu diesem Zweck mit einem zum Zentralstrahl 24 konzentrischen kreisförmigen Schlitz 28 versehen und weist außerdem eine zentrale Bohrung 29 für den Durchtritt des Primärstrahles 24 auf, der von dem zentralen Detektorelement $D_o$ gemessen wird.

Die Zuordnung durch den Blendenschlitz bedingt, daß das innerste Detektorelement von Streuquanten getroffen wird, die mit der Richtung des sie erzeugenden Primärstrahls einen größeren Streuwinkel einschließen (0,068 rad) als die Streustrahlung, die das äußerste Detektorelement erreicht (0,039 rad). Berücksichtigt man, daß der Impulsübertrag in guter Näherung dem Produkt aus Streuwinkel und der Energie der gestreuten Röntgenquanten proportional ist, dann folgt daraus, daß zur Bestimmung eines bestimmten Bereichs des Impulsübertragsspektrums für die der Blendenplatte 21 benachbarten Abschnitte des Untersuchungsbereichs Streuquanten aus einem höheren Energiebereich maßgeblich sind als für die der Platte 26 benachbarten Abschnitte. Um den Impulsübertragsbereich zwischen 0,8/nm und 1,8/nm zu erfassen, ist die geringste Quantenenergie 30 keV (bei dem größten Streuwinkel) und die größte Quantenenergie 115 keV (bei dem kleinsten Streuwinkel). Ein Bremsstrahlungsspektrum mit dieser Energieverteilung erfordert eine Betriebsspannung von mindestens 150 kV für die Röntgenröhre.

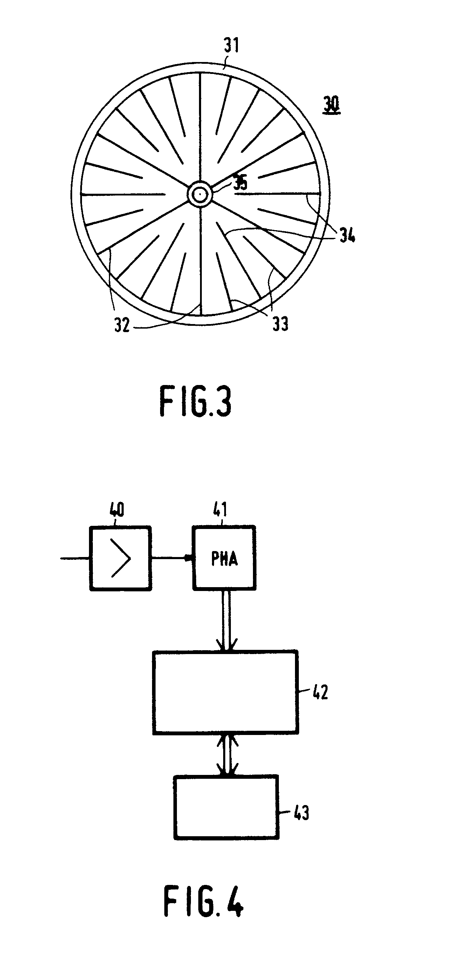

Damit das Impulsübertragsspektrum möglichst genau bestimmt werden kann, muß der Streuwinkel, den die von einem Detektorelement registrierte Streustrahlung mit dem Primärstrahl einschließt, möglichst genau definiert sein. Deshalb darf - wie auch in der EP-OS 360 347 in Verbindung mit Fig. 4b erläutert - nur solche Streustrahlung registriert werden, bei der der Streustrahl, der ihn hervorrufende Primärstrahl und der Zentralstrahl in einer Ebene bzw. in einer den Zentralstrahl 24 enthaltenden ebenen Schicht liegen. Diesem Zweck dient ein zwischen der Blende 27 und der Detektoranordnung D befindlicher Kollimator 30, der eine Anzahl von in radialen Ebenen befindlichen Lamellen aufweist. Der Kollimator 30 kann - anstatt im Bereich zwischen der Detektoranordnung D und der Sekundär-Blendenanordnung 27 - auch im Bereich zwischen Detektoranordnung und Platte 26 angeordnet sein, oder es kann sich in beiden Bereichen je ein solcher Kollimator befinden.

Die Lamellen des in Fig. 3 näher dargestellten Kollimators müssen verhältnismäßig dünn sein (z.B. 0,5 mm), um möglichst wenig von derjenigen Streustrahlung zu unterdrücken, die genau in den Lamellenebenen verläuft. Andererseits müssen die Lamellen je nach den geometrischen Verhältnissen eine Länge zwischen 1 m und 2 m haben. Würde man Bleche als Lamellen verwenden, dann wären diese sehr flexibel und würden sich unter ihrem eigenen Gewicht durchbiegen und die Detektoranordnung abschatten.

Bei der Erfindung bestehen die Lamellen daher aus einer Keramik, die entweder ein Schwermetall enthält oder auf ihren Außenflächen mit Schwermetall beschichtet ist, beispielsweise mit einer 50μm dicken Silberschicht. Normalerweise reichen derart dünne Silberschichten nicht aus, Röntgenstrahlung mit einer Energie von z.B. 100 keV zu absorbieren. Weil die Streustrahlung aber unter sehr kleinen Einfallswinkeln auf die Lamellen trifft bzw. weil sie, wenn sie unter einem größeren Winkel auftrifft, mehrere Lamellen passieren muß, bevor sie zum Detektor gelangt, reicht die Dicke völlig zur Absorption aus.

Gemäß Fig. 3 umfaßt der dort in einer Draufsicht dargestellte Kollimator einen ersten Teil mit einem Keramikkörper, der einen Hohlzylinder 35 umfaßt, durch den der Zentralstrahl 24 hindurchtreten kann und der auf der Außenseite gleichmäßig auf dem Umfang verteilte radial verlaufende Lamellen 32 aufweist. Der zweite Teil des Kollimators besteht aus einem Keramikkörper, der ein das Rohr 35 und die Lamellen 32 umschließendes Rohr 31 mit periodisch über seinen Umfang versetzten, nach innen gerichteten Lamellen 33 und 34 umfaßt. In Fig. 2 ist der besseren Übersicht halber von den genannten Kollimatorteilen nur die Außenkontur des zweiten Teils dargestellt. Der erste Teil wird nach seiner Herstellung in den zweiten geschoben, wobei der zweite für die Lamellen 32 vorzugsweise nicht näher dargestellte Nuten aufweist, so daß die beiden Kollimatorkörper relativ zueinander eine definierte Position einnehmen.

Während die Lamellen 32 den gesamten Raum zwischen den Hohlzylindern 31 und 35 ausfüllen, erstrecken sich die Lamellen 33, die beiderseits an den Lamellen 32 angeordnet sind, nur über die Hälfte des radialen Abstandes. Die in der Mitte zwischen zwei Lamellen 32 oder zwei Lamellen 33 befindlichen Lamellen 34 haben in dieser Richtung eine Abmessung, die dem arithmetischen Mittelwert zwischen den Abessungen der Lamellen 32 und 33 entspricht. Gegebenenfalls kann es zweckmäßig sein, daß die Dicke der Lamellen nach außen hin zunimmt.

Der Kollimator kann in Längsrichtung unterteilt sein und aus mehreren (z.B. 200 mm langen) Modulen bestehen, deren Stirnseiten auf geeignete Weise (z.B. durch Stecken) miteinander verbunden sind. Jedes Modul kann in einem Sinterverfahren hergestellt werden.

Fig. 4 zeigt die mit den Detektorelementen gekoppelte Elektronik zur Bestimmung des Impulsübertragsspektrums aus der gemessenen elastisch gestreuten Röntgenstrahlung. Sie entspricht praktisch der in der EP-OS 360 347 beschriebenen Schaltung, weshalb zur Vermeidung von Wiederholungen ausdrücklich darauf Bezug genommen wird. An dieser Stelle sei nur ausgeführt, daß die von den einzelnen Detektorelementen (z.B. aus Germanium) gelieferten Signale, deren Amplitude der Energie der gemessenen Quanten proportional ist, über einen Verstärker 40 einem Impulshöhenanalysator 41 zugeführt werden, der jedem von dem zugehörigen Detektorelement erzeugten Ausgangsimpuls ein digitales Datenwort zuordnet, das die Energie des Röntgenquants kennzeichnet. In der Verarbeitungseinheit 42 werden die Impulse aus den verschiedenen Energiebereichen gezählt, so daß sich ein Energiespektrum der Röntgenquanten ergibt. Dieses wird auf die Intensität der Primärstrahlung jenseits des Untersuchungsbereichs normiert (diesem Zweck dient die Messung des Zentralstrahl 24 durch das Detektorelement $D_o$), so daß sich eine Unabhängigkeit von der Absorption der Strahlung im Untersuchungsbereich ergibt.

Nachdem weitere Störeinflüsse in bekannter Weise eliminiert sind, kann aus dem Verlauf der Intensität als Funktion der Energie mit dem für jedes Detektorelement bekannten Streuwinkel die Intensität als Funktion des Impulsübertrages (Impulsübertragsspektrum) bestimmt werden. Dieses Impulsübertragsspektrum wird in der Einheit 42, die einen Mikroprozessor umfassen kann, mit den Impulsübertragsspektren der zu detektierenden Stoffe verglichen, die im Speicher 43 gespeichert sind. Bei Übereinstimmung des gemessenen Spektrums mit irgendeinem der gespeicherten Spektren wird dies in geeigneter Weise signalisiert.

Die Genauigkeit, mit der das Impulsübertragsspektrum ermittelt werden kann, hängt außer von dem Energieauflösungsvermögen der Detektorelemente in erster Linie von der Genauigkeit ab, mit der einem bestimmten Detektorelement ein bestimmter Streuwinkel zugeordnet werden kann. Diese Genauigkeit wiederum wird außer von den Abmessungen der Detektorelemente von der schlitzförmigen Öffnung 28 in der Blendenplatte 27 bestimmt. Je schmaler diese Öffnung ist, desto enger ist der Streuwinkelbereich, der einem bestimmten Detektorelement zugeordnet ist und desto genauer ist die Bestimmung des Impulsübertrags des Spektrums. Andererseits ist die Meßzeit umso größer, je schmaler der Schlitz ist bzw. je größer die Meßgenauigkeit ist. Insoweit entsprechen die Verhältnisse denjenigen bei der Anordnung nach der EP-OS 360 347.

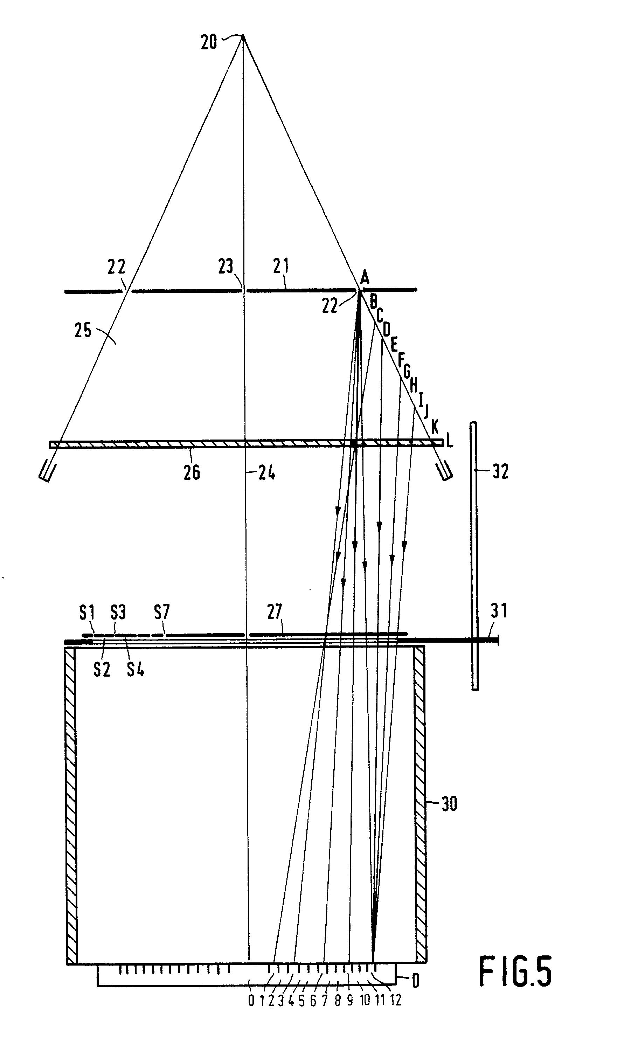

In Fig. 5 ist eine bevorzugte Ausführungsform dargestellt, die gegenüber der Anordnung nach Fig. 2 eine erhöhte Meßgenauigkeit bzw. kürzere Meßzeiten ergibt. Dabei sind gleichartige Komponenten mit denselben Bezugszeichen bezeichnet. Der Kollimator 30, der zum Begrenzen des Streuwinkels ebenso erforderlich ist, hat den gleichen Aufbau wie in Verbindung mit Fig. 3 beschrieben.

Der wesentliche Unterschied gegenüber der Anordnung nach Fig. 2 besteht darin, daß die Sekundär-Blendenanordnung 27 mit sieben ringförmigen, zum Zentralstrahl 24 konzentrischen Schlitzen S1..S7 versehen ist. Der mittlere Schlitz S4 hat die gleiche Funktion wie der Schlitz 28 bei der Anordnung nach Fig. 2: durch ihn hindurch "sieht" jedes der 12 Detektorelemente 1..12 einen von zwölf Abschnitten A..L des Primärstrahlenbündels im Untersuchungsbereich 25. Daneben dringt aber Streustrahlung auch von anderen Abschnitten zu den Detektorelementen, bzw. jedes Detektorelement "sieht" durch die anderen Schlitze noch andere Abschnitte. Wie durch die Verbindungslinien angedeutet, erreicht beispielsweise Streustrahlung vom Abschnitt A die Detektorelemente 3, 6, 9 und 12 (durch die Schlitze S7, S6, S5 und S4), und ebenso "sieht" das Detektorelement 12 neben dem Abschnitt A (durch S4) die Abschnitte D, G und J (durch S5..S7). In Fig. 5 ist nur einem Bruchteil der möglichen Verbindungswege eingezeichnet.

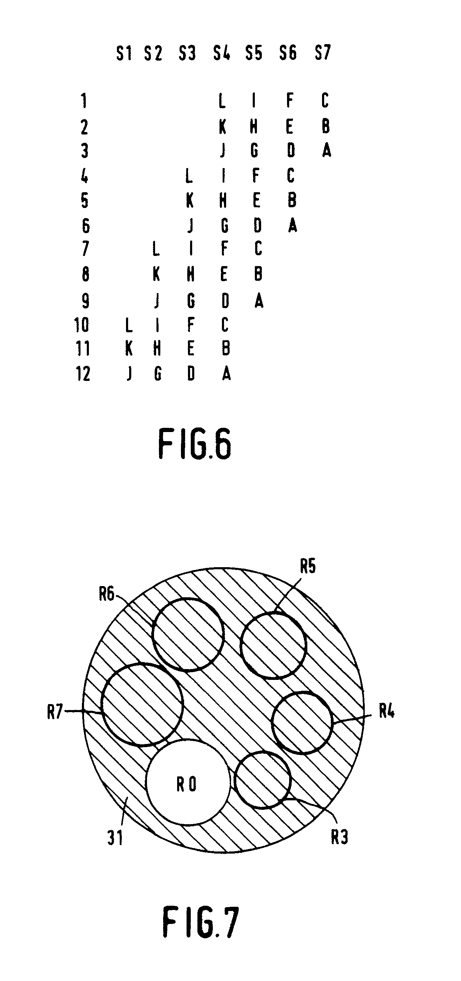

Die Gesamtheit dieser Wege ergibt sich aus der Matrixdarstellung gemäß Fig. 6, der man beispielsweise entnimmt, daß das Detektorelement 1 durch den Schlitz S4 hindurch den Abschnitt L "sieht". Man erkennt in dieser Darstellung, daß jedes Detektorelement von vier verschiedenen Abschnitten Streustrahlung empfangen kann und daß die Abschnitte, deren streustrahlung gemeinsam auf ein Detektorelement trifft, sich zyklisch wiederholen. Beispielsweise werden die Abschnitte L, I, F, C von jedem der Detektorelemente 1, 4, 7, 10 "gesehen", während die Abschnitte K, H, E, B von den Detektorelementen 2, 5, 8 und 11 "gesehen" werden. Durch benachbarte Schlitze hindurch "sieht" jedes Detektorelement (z.B S5 und S6) Abschnittte (z.B. A und D), zwischen denen jeweils zwei weitere Abschnitte liegen. Der Streuwinkelunterschied zwischen den Streustrahlen, die auf einem Detektorelement ankommen, ist daher genügend groß, um eine Auflösung der Beugungslinien zu erlauben, selbst wenn das gleiche Material für die streustrahlung verantwortlich ist. Aus den genannten Gründen ergibt sich für die Anordnung nach Fig. 5 daher die vierfache Nachweisempfindlichkeit im Vergleich zu der Anordnung nach Fig. 2.

Nachfolgend sei ein Dimensionierungsbeispiel für die in Fig. 5 dargestellte Anordnung gegeben. Die dem Untersuchungsbereich 25 zugewandten Seiten der Primär-Blendenanordnung 21 und der für die Röntgenstrahlung transparenten Platte 26 haben von der Strahlenquelle 20 einen Abstand von 744 bzw. 1194 mm. Der Durchmesser des schlitzförmigen Kreises 22 in der Primär-Blendenanordnung 21 ist so gewählt, daß das dadurch ausgeblendete Primärstrahlenbündel mit der Systemachse 24, die in diesem Fall mit dem Zentralstrahl zusammenfällt, ein Winkel von 0,041 rad einschließt (daß dieser Winkel in Fig. 5 wesentlich größer erscheint, liegt daran, daß der Abbildungsmaßstab in vertikaler Richtung wesentlich kleiner ist als in horizontaler Richtung). Die Detektorelemente haben von der Strahlenquelle einen Abstand von 2744 mm. Die mittleren Durchmesser des ersten, des fünften bzw. des zwölften Detektorringes betragen 6,61 mm, 17,46 mm und 33,84 mm. Die Breite der Detektorringe nimmt von innen nach außen linear ab, wobei die Breite des innersten Detektorringes 2,289 mm und die Breite des äußersten Detektorringes 1,701 mm beträgt.

Die schlitzförmigen Öffnungen S1..S7 in der Sekundär-Blendenanordnung 27 haben eine Breite von 0,9 mm. Die mittleren Radien der Schlitze S1..S7 betragen 21,62 mm, 25,60 mm, 29,28 mm, 32,66 mm, 35,78 mm, 38,67 mm, 41,32 mm. In der in Fig. 1 dargestellten Grundposition der Blende 27 - das ist die Position, in der jedes der zwölf Detektorelemente durch den Schlitz S4 hindurch die Streustrahlung aus einem der zwölf Untersuchungsbereiche A..L des Untersuchungsbereiches 25 erfaßt - hat die Sekundär-Blendenanordnung 27 von der Strahlenquelle 20 einen Abstand von 1774,5 mm.

Die Signalverarbeitung kann dabei ablaufen, wie nachfolgend für das Detektorelement 12 beschrieben, das von Streustrahlung aus den Abschnitten A, D, G und J getroffen wird. Die zugeordneten Streuwinkel seien mit Ta, Td, Tg und Tj bezeichnet. Das gemessene Energiespektrum kann in das Impulsübertragsspektrum unter Benutzung der Formel

$$x = c^* \sin(T/2)/I_o \qquad (1)$$

umgerechnet werden, wobei c eine Konstante, $I_o$

die Wellenlänge der Streustrahlung und T der jeweilige Streuwinkel ist. Da es für jedes Detektorelement vier mögliche Streuwinkel gibt, wird zunächst angenommen, daß die gesamte Streustrahlung aus dem Abschnitt A stammt, und das Energiespektrum wird unter Benutzung von Gleichung (1) mit dem Wert $T = T_a$ in ein Impulsübertragsspektrum konvertiert. Dieses Spektrum wird entweder direkt oder nach Addition der Spektren der Detektoren 3, 6 und 9 (jeweils berechnet für den Abschnitt A) mit den Spektren aus einem Katalog von Spektren verglichen, die in dem Speicher 43 (Fig. 4) gespeichert sind.

Wenn sich der gewünschte Stoff tatsächlich im Abschnitt A befindet, wird er bereits jetzt detektiert. Zwar überlagern sich in der Praxis diesem Spektrum die Spektren anderer Stoffe, die sich z.B. in den Abschnitten D, G und J befinden, doch ist dies in der Regel nicht störend, weil diese Spektren den in Fig. 1 mit I2 bezeichneten Verlauf haben, während das typische Spektrum (I1) der gesuchten Stoffe sehr ausgeprägt ist.

Wenn sich keiner der gesuchten Stoffe im Abschnitt A befindet, wird der Prozeß wiederholt, wobei für die Konvertierung des Energiespektrums in ein Impulsübertragsspektrum gemäß Gleichung (1) die Winkel Td, Tg und Tj benutzt werden. Danach wird dieser Prozeß für die anderen Detektorelemente und die anderen Abschnitte wiederholt.

Das anhand von Figur 5 dargestellte Prinzip kann in verschiedener Hinsicht variiert werden.

So ist es beispielsweise möglich, daß bei der Anordnung nach Fig. 5 mehrere Detektoren weggelassen werden, ohne daß dies die Funktion der Anordnung berührt - wohl aber deren Ansprechempfindlichkeit. Wie Fig. 6 beispielsweise deutlich zeigt, können die drei innersten Detektorelemente 1, 2, 3 und die drei äußersten Detektorelemente 10, 11, 12 weggelassen werden (in diesem Fall werden auch die beiden äußersten Schlitze S1 und S7 überflüssig); gleichwohl wird jeder der zwölf Detektorabschnitte A..L von zwei Detektorelementen erfaßt. Eine solche Anordnung würde also die Streustrahlung aus den verschiedenen Abschnitten des Primärstrahlenkegels mit der halben Anzahl von Detektorelementen und mit der halben Meßzeit verarbeiten können wie eine Anordnung nach Fig. 2.- Auf der anderen Seite wäre es bei der Anordnung nach Fig. 5 möglich, außen und/oder innen weitere Detektorelemente vorzusehen, so daß es keinen Schlitz mehr geben würde (wie den Schlitz S4 bei Fig. 5), durch den hindurch jedes Detektorelement von Streustrahlung aus einem der Abschnitte des Primärstrahlenkegels getroffen wird. Mit dieser erhöhten Zahl von Detektorelementen wäre eine gewisse Erhöhung der Detektionsempfindlichkeit verbunden.

Bei dem anhand der Figuren 5 und 6 dargestellten Ausführungsbeispiel fällt durch einen benachbarten Schlitz auf ein Detektorelement die Streustrahlung vom drittnächsten Abschnitt im Primärstrahlenbündel (v = 3); beispielsweise trifft das Detektorelement 3 durch den zum Schlitz S7 benachbarten Schlitz S6 Streustrahlung aus dem Abschnitt D, der in bezug auf den mit S7 korrelierten Abschnitt A der drittnächste ist. Die Schlitze könnten aber auch so gelegt werden, daß Streustrahlung vom viertnächsten (v = 4) oder vom zweitnächsten Abschnitt (v = 2) zu dem gleichen Detektorelement gelangt. In diesem Fall könnten die Schlitze S1 und S7 entfallen (bei v = 4) bzw. es könnten noch vier weitere Schlitze hinzutreten (bei v = 2). Jedes Detektorelement würde dabei anstelle von vier Abschnitten drei (v = 4) oder sechs (v = 2) Abschnitte "sehen", so daß die Detektionsempfindlichkeit entsprechend kleiner oder größer wäre.

Die Zahl z der Abschnitte bzw. der Detektorelemente muß nicht - wie im Ausführungsbeispiel - 12 betragen. Zweckmäßigerweise sollte diese Zahl jedoch durch v ohne Rest teilbar sein (z.B. z = 9 für v = 3 oder z = 10 für v = 5). Die Steigerung der Empfindlichkeit beträgt dabei z/v, wenn 2z/v-1 Schlitze - in der jeweils erforderlichen Position - vorhanden sind.

Die Form der Blendenanordnung 27 hängt stark von der Geometrie der Detektorelemente ab. Bei dem in Fig. 5 dargestellten Ausführungsbeispiel ist die Blendenanordnung eine ebene Platte. Voraussetzung dafür ist, daß der Abstand benachbarter Detektorelemente voneinander bzw. deren Breite dem Abstand des betreffenden Detektorelementes von der Schnittlinie proportional ist, die durch den Primärstrahlenkegel und die Ebene definiert wird, in der der Detektor D liegt. Auch die Abschnitte A..L auf dem Primärstrahlenkegel haben dann eine von innen nach außen abnehmende Breite.

Benutzt man demgegenüber Detektorringe mit jeweils gleicher Breite, dann muß die zweite Blendenanordnung hingegen eine Form haben, die sich zum Untersuchungsbereich hin öffnet, wobei die Breite der Abschnitte auf dem Primärstrahlenkegel noch stärker von innen nach außen abnimmt. - Trifft man hingegen die Anordnung so, daß die Abschnitte auf dem Primärstrahlenkegel alle die gleiche Breite haben, dann muß die Blendenanordnung 27 die Form einer zu den Detektoren hin sich öffnenden Schüssel haben, wobei die Breite der Detektorelemente von innen nach außen noch stärker abnimmt als bei dem in Fig. 1 dargestellten Ausführungsbeispiel.

Nur in einigen Sonderfällen, nämlich dann, wenn sich in dem Untersuchungsbereich neben einer kleinen Menge des gesuchten Stoffes große Mengen von stark streuenden Stoffen oder polykristalline Stoffe befinden, kann die Überlagerung der Spektren aus verschiedenen Abschnitten zu Fehlinterpretationen führen. Diese Fehlinterpretationen lassen sich dadurch unterdrücken, daß alle Schlitze mit Ausnahme eines einzigen Schlitzes abgedeckt werden. Dann kann nämlich jedes Detektorelement nur noch aus einem Abschnitt Streustrahlung empfangen. Die zu diesem Zweck erforderlichen Abdeckmittel sind in Fig. 7 dargestellt. Sie können die Form einer drehbaren Blendenscheibe 31 haben, die um eine zur Systemachse parallele Ache 32 schwenkbar ist und die neben einem kreisförmigen Ausschnitt R0 eine Reihe von ringförmigen Ausschnitten R3..R7 umfaßt. Wenn sich - wie in Fig. 5 - der kreisförmige Ausschnitt R0 im Strahlengang befindet, kann Streustrahlung durch sämtliche Schlitze S1..S7 zu den Detektorelementen gelangen. Befindet sich hingegen eine der ringförmigen Öffnungen R3..R7 im Strahlengang, was durch eine Drehung um die Achse 32 erreichbar ist, dann kann Streustrahlung nur noch durch eine einzige der Öffnungen S3..S7 gelangen, während alle anderen schlitzförmigen Öffnungen abgedeckt sind.

Anstelle einer drehbaren Platte könnte als Abdeckmittel auch ein Schieber verwendet werden, der mit kreis- und ringförmigen Ausschnitten versehen ist und der senkrecht zur Systemachse verschoben wird. Es sind auch anders konstruierte Abdeckmittel möglich. Wesentlich ist nur, daß sie es gestatten, die Streustrahlung wahlweise von sämtlichen schlitzförmigen Öffnungen S1..S7 oder nur von jeweils einer dieser Öffnungen zu empfangen.

Wenn dabei sämtliche Abschnitte A..L gleichzeitig überwacht werden sollen, muß sich die ringförmige Öffnung R4 im Strahlengang befinden, durch die hindurch nur die den Schlitz S4 durchsetzende Streustrahlung zu den Detektorelementen gelangt. Die mittlere Breite eines von einem der zwölf Detektorelemente überwachten Abschnitte beträgt dabei 37,5 mm - bei einer Tiefe des gesamten Untersuchungsbereichs 450 mm. Befindet sich aber in einem solchen Abschnitt eine Schicht eines der nachzuweisenden Stoffe, deren Dicke klein im Vergleich zu der mittleren Dicke eines Abschnitts ist, dann kann der Nachweis dieses Stoffes immer noch Schwierigkeiten bereiten.

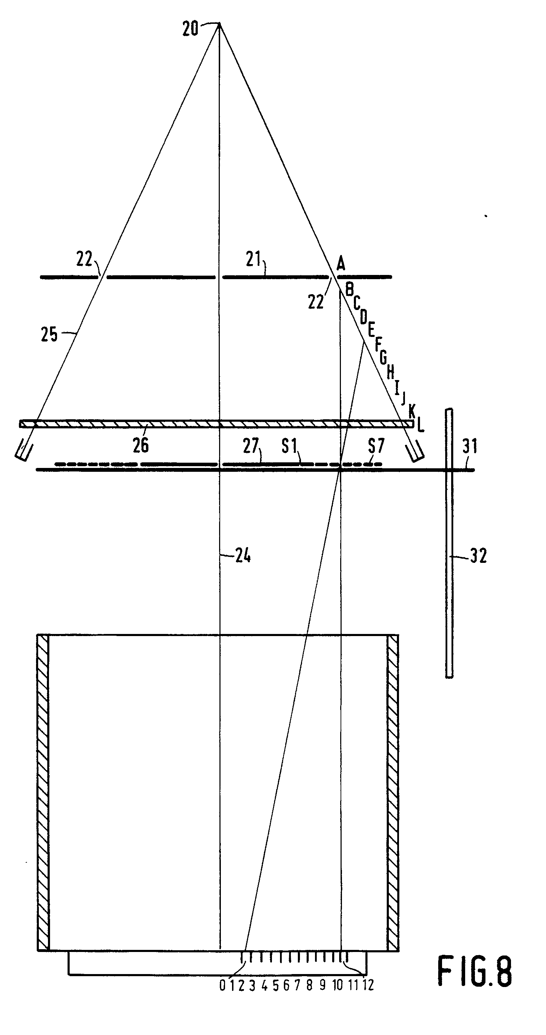

Diese Schwierigkeiten lassen sich dadurch verringern, daß die Blendenanordnung 27 und die Abdeckmittel 31 gemeinsam längs der Achse 32 zum Untersuchungsbereich hin verschoben werden. Wie die Abbildung nach Fig. 8 zeigt, können die zwölf Detektorelemente durch den Schlitz S4 hindurch dann nicht mehr sämtliche Abschnitte A..L des Primärstrahlenkegels erfassen, sondern nur einen mittleren Teil davon (d.h. die Zuordnung nach Fig. 6 zwischen Abschnitten, Schlitzen und Detektorelementen ist dann aufgehoben).

Die geschilderte Änderung der Geometrie durch Verschieben der Komponenten 27 und 31 hat zur Folge, daß die mittlere Dicke einer Schicht, die von jeweils einem der zwölf Detektorelemente erfaßt wird, im selben Verhältnis abnimmt, in dem der von den Detektorelementen erfaßte Bereich abnimmt (ca. 1: 3). Dadurch wird der Nachweis von in relativ dünnen Schichten vorkommenden Stoffen erleichtert. Es kommt hinzu, daß die durch die Geometrie der Anordnung vorgegebene Ungenauigkeit bei der Bestimmung des Streuwinkels abnimmt, wenn sich die schlitzförmige Öffnung S1..S7 dichter am Untersuchungsbereich befindet, so daß das Impulsübertragsspektrum mit verbesserter Auflösung ("schärfer") bestimmt werden kann.

Fig. 8 zeigt die Sekundär-Blendenaordnung demgemäß in einer Position, die näher am Untersuchungsbereich liegt als die Grundposition der Fig. 5. Wenn der Abstand (vom Strahler 20) dabei auf ca. 1300 mm abgenommen hat, kann durch den Schlitz S4 hindurch nur das zweite Fünftel (von Strahler 20 aus gezählt) erfaßt werden. Sollen andere Abschnitte abgebildet werden, dann muß ein anderer Schlitz freigegeben werden. Zur Abbildung der Abschnitte A..C beispielsweise wird die Platte 31 so geschwenkt, daß sich die ringförmige Öffnung R3 im Strahlengang befindet, die nur den Schlitz S3 freigibt. Zur Überwachung der dichter bei den Detektoren liegenden Abschnitte hingegen wird eine der ringförmigen Öffnungen R5..R7 in den Strahlengang geschwenkt. Dabei ist es zweckmäßig, die Komponenten 27 und 31 so in Richtung der Systemachse 24 zu verschieben, daß das Verhältnis des mittleren Abstandes des erfaßten Teils des Primärstrahlenkegels von der zweiten Blendenanordnung zu deren Abstand von den Detektorelementen näherungsweise konstant bleibt.

Eine Untersuchung kann dabei wie folgt vor sich gehen. Zunächst wird die Blendenplatte 27 in die in Figur 5 dargestellte Position gebracht und der kreisförmige Ausschnitt R0 wird in den Strahlengang geschwenkt. Dann können sämtliche Abschnittte A bis L überwacht werden, und zwar jeder von mehreren Detektorelementen. Kann dabei keiner der zu detektierenden Stoffe nachgewiesen werden, wird die Blendenanordnung 27 näher an den Untersuchungsbereich herangefahren, wobei die Abdeckmittel 31 um die Achse 32 geschwenkt werden, so daß nacheinander die ringförmigen Ausschnitte R7..R3 wirksam werden, wodurch die Abschnitte L..A nacheinander "gezoomt" werden.

Anstatt durch eine einzige parallel zur Systemachse verschiebbare Blendenanordnung kann die gleiche Wirkung auch dadurch erreicht werden, daß in den unterschiedlichen Blendenpositionen jeweils eine Sekundär-Blendenanordnung vorgesehen ist, von denen jeweils eine senkrecht zur Systemachse 24 in den Strahlengang verschoben wird. Mit Ausnahme der in der Grundposition befindlichen Blendenanordnung müssen diese Blendenanordnungen lediglich einen einzigen Schlitz (mit unterschiedlichem Radius) enthalten, wobei Breite und Radius der Schlitze optimiert werden können.

Bei dieser Ausgestaltung kann der Kollimator 30 mit den fächerförmigen Lamellen bis dicht an den Untersuchungsbereich heranreichen (nur in den verschiedenen Blendenpositionen muß eine seitliche Einführungsöffnung für die Sekundärblenden vorhanden sein), was den Vorteil hat, daß der Abstand der in dem Kollimator 30 enthaltenen Lamellen voneinander vergrößert werden kann.

Nachteilig ist bei dieser Lösung aber, daß für jede Blendenposition ein Antrieb vorhanden sein muß, der die zugehörige Blende senkrecht zur Systemachse in eine exakt vorgegebene Position bewegen muß. Deshalb ist diese Ausführungsform recht aufwendig.

Bei den vorstehend erläuterten Ausführungsbeispielen ist eine Rotationssymmetrie gegeben. Grundsätzlich ist jedoch keine Symmetrie erforderlich; es kann beispielsweise auch mit einem Primärstrahlenbündel mit halbkreisförmigem Querschnitt gearbeitet werden, wenn der bzw. die Schlitze in der Blendenanordnung 27 und die Detektorelemente ebenfalls Halbkreisform haben. Ebenso ist es nicht erforderlich, daß der Querschnitt des Primärstrahlenbündels, die Schlitze und die Detektorelemente Kreisform haben. Allgemein gilt, daß das Primärstrahlenbündel sich im Untersuchungsbereich auf der Mantelfläche eines Kegels (oder auf einem Teil einer solchen Mantelfläche) ausbreiten muß.

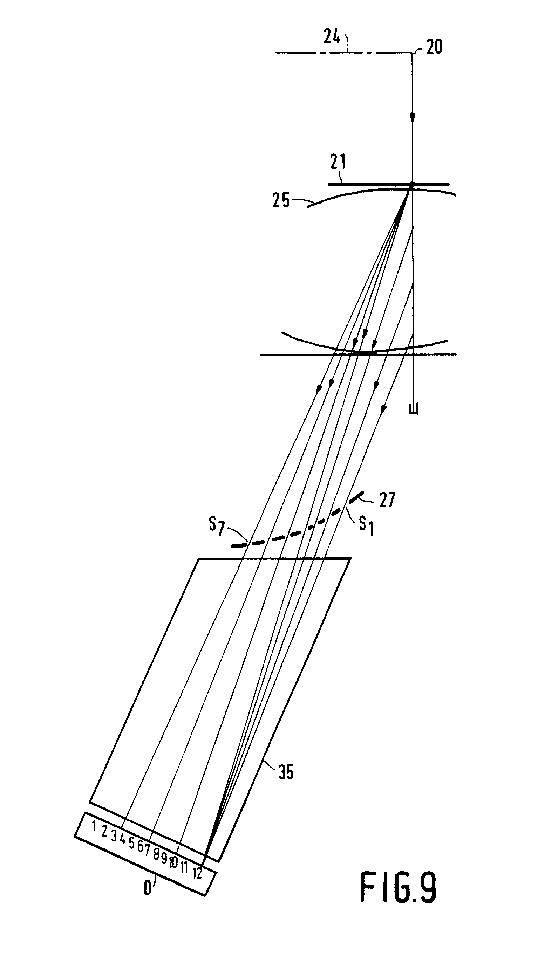

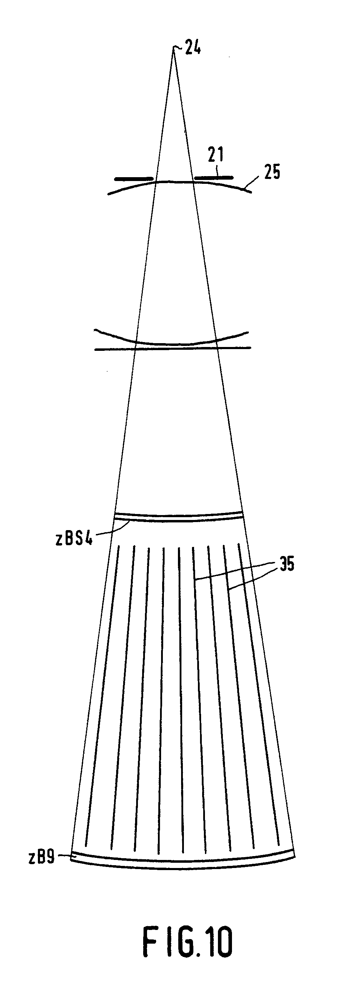

In den Figuren 9 und 10 ist eine in dieser Hinsicht modifizierte Ausführungsform der Erfindung aus zwei um 90° gegeneinander versetzten Perspektiven dargestellt. Die Primärstrahlenblende 21 ist dabei mit einem geradlinigen zur Zeichenebene der Figur 9 senkrechten Schlitz versehen, so daß der Untersuchungsbereich von einem ebenen Primärstrahlenfächer durchsetzt wird. Zu einem derartigen Fächer entartet ein Sektor auf der Mantelfläche eines Kegels, dessen halber Öffnungswinkel gerade 90° beträgt. Die durch den Fokus 20 verlaufende Systemachse 24 wird durch ebene Lamellen 35 aus strahlenabsorbierendem Material (Fig. 9 zeigt nur eine davon) zwischen dem Untersuchungsbereich und der Detektoranordnung D definiert. Sie entspricht der gemeinsamen Schnittgeraden aller Lamellenebenen und verläuft senkrecht zum Primärstrahlenfächer.

Zwischen dem Untersuchungsbereich und der Detektoranordnung befindet sich eine Blendenanordnung mit sieben schlitzförmigen Öffnungen S1..S7. Die schlitzförmigen Öffnungen befinden sich jeweils in zur Systemachse 24 senkrechten Ebenen und haben die Form eines um die Systemachse gekrümmten Kreisbogens. Das gleiche gilt für die Detektorelemente 1..12. Da ein relativ großer Bogen in der Praxis nicht durch ein einziges Detektorelement realisiert werden kann, können die Detektorelemente auch durch auf dem Umfang versetzte Unter-Detektorelemente gebildet werden, deren Ausgangssignale einander überlagert werden. In Fig. 9 ist der besseren Übersicht halber der Streuwinkel, unter dem streustrahlung aus dem Fächer die Detektorelemente erreicht, relativ groß dargestellt. Tatsächlich ist der Winkel aber so groß wie in Verbindung mit Fig. 2 angegeben, so daß die Detektorelemente überwiegend von elastisch gestreuter Röntgenstrahlung getroffen werden.

Wenn mit der Anordnung nach den Figuren 2, 5 oder 8 ein Gepäckstück untersucht werden soll, dann ist eine zweidimensionale Relativverschiebung zwischen dem Strahlenfächer und dem Gepäckstück erforderlich, wobei in äquidistanten Positionen dieser zweidimensionalen Relativverschiebung die Impulsübertragsspektren in den verschiedenen Tiefen des Untersuchungsbereiches bestimmt werden müssen. Bei der in Fig. 9 dargestellten Anordnung kann eine eindimensionale Relativverschiebung (senkrecht zur Ebene des Strahlenfächers) ausreichen, wenn der Öffnungswinkel des fächerförmigen Strahlenbündels genügend groß ist, um das gesamte Gepäckstück zu erfassen. Dadurch wird die Untersuchung vereinfacht und verkürzt.

## Patentansprüche

1. Anordnung zum Messen des Impulsübertragsspektrums von in einem Untersuchungsbereich elastisch gestreuten Röntgenquanten, mit einem polychromatischen Röntgenstrahler (20), einer zwischen dem Röntgenstrahler (20) und dem Untersuchungsbereich (25) angeordneten Primär-Blendenanordnung (21) zur Ausblendung eines den Untersuchungsbereich auf der Mantelfläche eines Kegels durchsetzenden Primärstrahlenbündels, einer aus mehreren Detektorelementen (1..12) bestehenden Detektoranordnung und einer zwischen dem Untersuchungsbereich und der Detektoranordnung (D) befindlichen Sekundär-Blendenanordnung (27), die den verschiedenen Detektorelementen jeweils die elastisch gestreute Streustrahlung zuordnet von in unterschiedlichen Tiefen des Untersuchungsbereiches liegenden Abschnitten zugeordnet,
dadurch gekennzeichnet, daß beide Blendenanordnungen (21, 27) eine schlitzförmige Öffnung aufweisen und daß die schlitzförmigen Öffnung (22,28; S4) und die Detektorelemente (1..12) sich kreisbogenförmig um eine durch den Strahler (20) verlaufende Systemachse (24) erstrecken.

2. Anordnung nach Anspruch 1,
   dadurch gekennzeichnet, daß die zweite Blendenanordnung noch weitere, kreisbogenförmig um die Systemachse herum verlaufende schlitzförmige Öffnungen (S1..S3; S5..S7) enthält, die derart angeordnet sind, daß wenigstens ein Teil der Detektorelemente (1..12) von Streustrahlung getroffen wird, die in weiteren Abschnitten des Primärstrahlenbündels unter anderen Streuwinkeln gestreut wird.

3. Anordnung nach Anspruch 2,
   dadurch gekennzeichnet, daß Mittel zum Abdecken der weiteren schlitzförmigen Öffnungen vorgesehen sind.

4. Anordnung nach einem der Ansprüche 1 bis 3
   dadurch gekennzeichnet, daß die schlitzförmige Öffnung (28; S4), der Querschnitt durch das Primärstrahlenbündel und die Detektorelemente (1..12) Kreisform aufweisen (Fig. 2).

5. Anordnung nach einem der Ansprüche 1 bis 4,
   dadurch gekennzeichnet, daß das Primärstrahlenbündel die Form eines ebenen Fächers hat (Fig. 9,10)

6. Anordnung nach Anspruch 5,
   dadurch gekennzeichnet, daß die Systemachse (24) die Ebene des Fächers unter einem Winkel von 90° schneidet.

7. Anordnung nach einem der Ansprüche 2 bis 6,
   dadurch gekennzeichnet, daß der Abstand der Detektorelemente (1..12) voneinander mit zunehmendem Abstand von dem Primärstrahlenbündel zunimmt und daß die Sekundär-Blendenanordnung (27) eben ist.

8. Anordnung nach einem der vorhergehenden Ansprüche,
   dadurch gekennzeichnet, daß die polychromatische Röntgenstrahlung von einem Röntgenstrahler emittiert wird, der eine Anode aufweist, die wenigstens teilweise mit einem Metall beschichtet ist, dessen Ordnungszahl größer ist als 80, vorzugsweise mit Thorium.

9. Anordnung nach einem der vorstehenden Ansprüche,
   dadurch gekennzeichnet, daß mehrere längs der Systemachse (24) gegeneinander versetzte Blendenpositionen vorgesehen sind, daß wenigstens eine Sekundär-Blendenanordnung (27) vorhanden ist und daß sich jeweils nur in einer der Blendenpositionen eine Sekundär-Blendenanordnung befindet

10. Anordnung nach Anspruch 9,
    dadurch gekennzeichnet, daß eine einzige Sekundär-Blendenanordnung (27) vorhanden ist, die relativ zum Untersuchungsbereich bzw. zur Detektoranordnung parallel zur Systemachse (24) verschiebbar ist.

11. Anordnung nach Anspruch 10,
    dadurch gekennzeichnet, daß gemeinsam mit der zweiten Blendenanordnung verschiebbare Abdeckmittel (31) vorgesehen sind, die derart verstellbar sind, daß jeweils eine der schlitzförmigen Öffnungen (z.B. S4) in der Sekundär-Blendenanordnung (27) freigegeben wird und die auf die anderen Öffnungen gerichtete Streustrahlung absorbiert wird.

12. Anordnung nach Anspruch 11,
    dadurch gekennzeichnet, daß die Abdeckmittel (31) eine strahlenabsorbierende Platte mit mehreren kreisbogenförmigen Öffnungen (R3..R7) umfaßt, die an die Abmessungen der schlitzförmigen Öffnungen angepaßt sind und von denen jeweils eine durch eine Verschiebe- oder Drehbewegung im Strahlengang wirksam wird.

13. Anordnung nach einem der vorhergehenden Ansprüche,
    dadurch gekennzeichnet, daß zwischen dem Untersuchungsbereich (25) und der Detektoranordnung (D) eine Kollimatoranordnung (30) mit Lamellen (32,33,34) vorgesehen ist, die die Streustrahlung absorbieren und in Ebenen liegen, die jeweils die Systemachse (24) enthalten.

14. Anordnung nach Anspruch 13,
    dadurch gekennzeichnet, daß die Lamellen (32,34) aus einer mit einer Schwermetallschicht versehenen oder ein Schwermetall enthaltenden Keramik bestehen.

15. Anordnung nach einem der Ansprüche 13 oder 14,
    dadurch gekennzeichnet, daß die Lamellen in Richtung senkrecht zur Systemachse (24) unterschiedliche Abmessungen haben, so daß der Zwischenraum zwischen den Lamellen sich als Funktion des Abstandes von der Systemachse möglichst wenig ändert.

FIG.1

FIG.2

FIG.3

FIG.4

FIG.5

|     | S1 | S2 | S3 | S4 | S5 | S6 | S7 |
|-----|----|----|----|----|----|----|----|
| 1   |    |    |    | L  | I  | F  | C  |
| 2   |    |    |    | K  | H  | E  | B  |
| 3   |    |    |    | J  | G  | D  | A  |
| 4   |    |    | L  | I  | F  | C  |    |
| 5   |    |    | K  | H  | E  | B  |    |
| 6   |    |    | J  | G  | D  | A  |    |
| 7   |    | L  | I  | F  | C  |    |    |
| 8   |    | K  | H  | E  | B  |    |    |
| 9   |    | J  | G  | D  | A  |    |    |
| 10  | L  | I  | F  | C  |    |    |    |
| 11  | K  | H  | E  | B  |    |    |    |
| 12  | J  | G  | D  | A  |    |    |    |

## FIG.6

## FIG.7

FIG.8

FIG.9

FIG.10